# EUROPEAN PATENT APPLICATION

(11) **EP 1 209 929 A2**
(43) Date of publication of application: **29.05.2002**
(21) Application number: 01660167.6
(22) Date of filing: 14.09.2001
(51) Int. Cl.: H04Q 7/20, H04M 1/00, H04M 3/42

(54) **Method and apparatus for taking the time difference between caller and called party into consideration when establishing a telephone connection**

(30) Priority: 22.11.2000 FI 20002559
(71) Applicant: Nokia Corporation, 02150 Espoo (FI)
(72) Inventor: Laakkonen, Mika, 24800 Halikko (FI)
(74) Representative: Brax, Matti Juhani

(57) **Abstract**

The invention relates to establishing a telephone or other telecommunications connection between at least two persons, requiring both of them to be present at each end of the connection. Particularly the invention concerns taking into account the fact that the local time may be different at different ends of the connection. The objective of the invention is to reduce telephone calls coming at an inconvenient time because of the time difference, and to make it easier to identify them. When the command to set up a call connection is given, the time parameter of the destination is determined. If a time difference is found to exist between the destination and the device requesting the speech connection, an indication of this is given to the party who wants the speech connection. After this, the request to set up a speech connection can still be cancelled, if it seems advisable.

## Description

The invention relates to establishing a telephone or other telecommunications connection between at least two persons, requiring both of them to be present at each end of the connection. Particularly the invention concerns taking into account the fact that the local time may be different at different ends of the connection.

With the increasing use of mobile phones, the number of unwanted calls, intended or unintended, will grow as well. For example, a business call to a colleague who is in a different time zone may cause unintentional annoyance, if the caller does not pay attention to the time zone difference. Checking the time difference from a telephone book and calculating the time of the recipient on the basis of that requires an extra effort. Furthermore, the information about time zone differences is not always readily available for a user of a mobile phone. In order to prevent calls coming at an inconvenient time, the recipient may switch off his mobile phone, for example, but then he may also lose some important calls. The mobile phone can also be set into the silent mode, but that would also prevent noticing the urgent calls. It is possible to make only the calls of a certain group of callers silent, but then the user always has to remember to return the settings back to normal.

In this patent application, the word call is used to mean any telecommunications connection between at least two persons, requiring both of them to be present at each end of the connection. Correspondingly, a telephone device means any device, which is in the immediate use of a person for maintaining such a connection.

The names and numbers saved in the telephone device can be grouped into so-called CLI (Client Line Identification) caller groups. The members of the group can be given common properties, such as a certain ringing tone, by which the group from which the call is coming is immediately identified. Separate groups could be, for example, 'colleagues in Finland' and 'colleagues in London', in which case it would be possible to know already from the ringing tone that the caller will communicate in English, for example.

The telephone device comprises an integrated real time clock (RTC), the time of which can be shown on the telephone display. The time can be changed by keyboard input. The operators also have at their disposal a service, which updates the clock of the telephone automatically. The network tells the telephone the so-called null zone time or Greenwich mean time (GMT) and the deviation from the Greenwich time i.e. the time zone where the telephone is at the moment. By means of these two times, the telephone device updates the time of the device at the moment, which is dependent on the place. Thus the user's telephone device keeps to the right time, even if the user travels from one time zone to another.

The objective of the invention is to reduce telephone calls coming at an inconvenient time because of the time difference, and to make it easier to identify them.

The objective is achieved so that the telephone device determines the time difference of the receiving telephone device in relation to its own time. If the information of the time difference is obtained, the user can be asked if the call should be connected in spite of the time difference or not.

The invention is characterized in what is set forth in the characterizing part of the independent claim.

A mobile phone has a real time clock, and thus the telephone device knows its own time at each moment, which is dependent on the place. When the user gives a command to establish a telephone connection, the telephone device could take the time of the recipient into account before connecting the call. The time of the recipient can be determined in different ways. The telephone device compares the obtained time of the destination to its own time. If the times differ from each other, the telephone device indicates this by the loudspeaker and/or display to the user asking to establish a connection, whereupon the user can decide if the call should be connected. If the user considers the time of the destination to be inconvenient for a telephone call, he can cancel the command to establish a connection.

For calculating the time of the destination, the time zone information can be added to the memory of the telephone device in connection with each saved name and telephone number. The telephone device can retrieve the time zone information from its own memory, when a command to establish a connection with a certain number in the memory has been given. On the basis of the time zone information, the telephone device can calculate the time of the destination at the moment. The time zone information can also be saved in the properties of a certain caller group. For example, workers of units that are situated in different time zones could form different groups of callers, in which case the time zone information would have been saved for each group in addition to other properties. Then it would be possible to add members to the group without changing the time zone information.

When a call is made to a line telephone, the device giving the command to establish a connection can check the time zone information of the destination on the basis of the country code and area code. In addition, the Home Location Register of the network can send time zone information to the users.

In the following, the invention will be described in more detail with reference to the examples of preferred embodiments and the accompanying drawings, in which
- Figure 1: shows a method according to one embodiment of the invention in the form of a flow chart,
- Figure 2: shows a method according to one embodiment of the invention in the form of a flow chart,
- Figure 3: shows a mobile phone according to one embodiment of the invention,
- Figure 4: shows a method according to one embodiment of the invention and
- Figure 5: shows a method according to one embodiment of the invention.

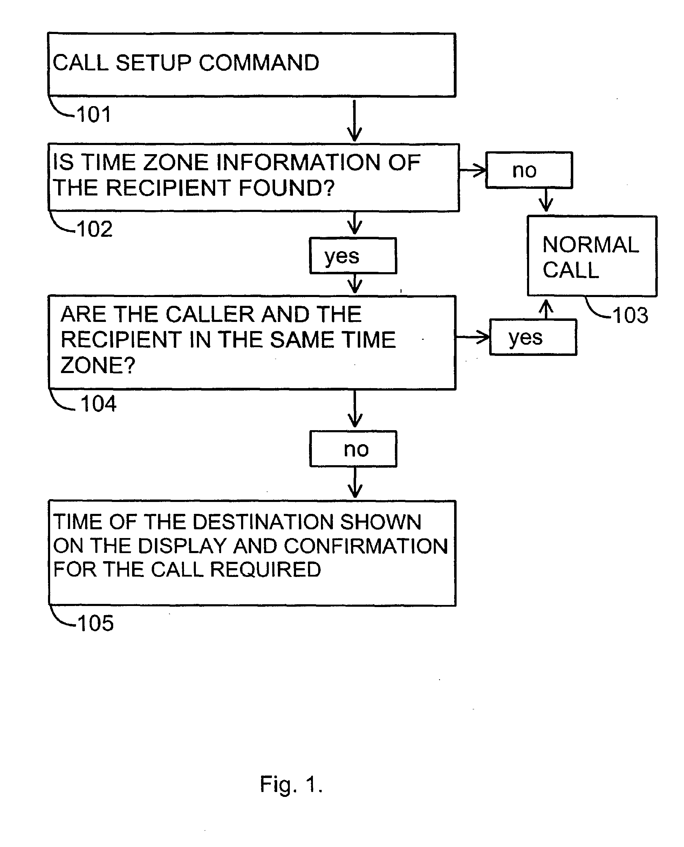

The operations performed by the telephone device for determining the time zone information will now be discussed with reference to the flow chart of Fig. 1. In step 101, the user of the device keys in a command for establishing a speech connection. After this, the telephone device searches for the time zone information 102 of the destination. If the time zone information is not available, a normal telephone call 103 is made. If the telephone device obtains the time zone information, it calculates the time of the destination at the moment and compares it to its own time 104. If the times to be compared are the same with a certain accuracy, a normal telephone call is made according to step 103. The comparison must be performed so that a small difference in the times does not cause an incorrect warning of a time difference. Even clocks in the same time zone are seldom at exactly the same time, and people may on purpose set the clock of their telephone device a little ahead in order to be at the agreed place in good time. That is why a small tolerance must be allowed in the times to be compared, before it is assumed on the basis of the comparison that the caller and the recipient are in different time zones. If there is a difference of an hour or more in the times to be compared, the telephone device outputs to its display the time to which the user is trying to establish a connection, warns the user possibly also through the loudspeaker by a warning tone and asks for confirmation to connect the call 105. At this stage, the command to establish the connection can still be easily cancelled, if the time seems to be inconvenient. Depending on the application, the telephone device either asks for confirmation in step 105 or the user can interrupt the command to establish a connection.

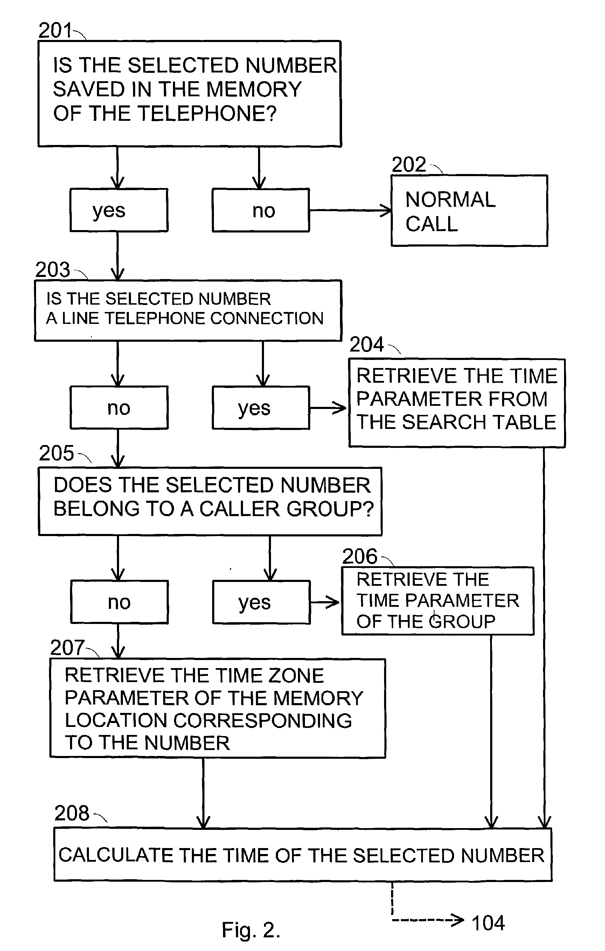

Fig. 2 shows in more detail how the telephone device finds the time zone information of the object of the call request in step 102 of Fig. 1. In Fig. 2 the telephone device searches for the time zone information saved in the memory of the telephone on the basis of the telephone number 201. For example, the time zone information can be saved separately with each name and number saved in the memory of the telephone. Then the telephone finds the time zone information on the basis of the number of the command to establish a connection, if the number has been saved in the memory of the telephone 201. If the device does not recognize the number, or in other words, it is not found in the memory, the time zone information is not obtained either, and a normal telephone call 202 is made. Finding the time zone information also requires that this information has been saved in the memory of the telephone. In order to prevent errors, each saved combination of name and number must have a default value in the time zone information. Preferably the default value is the home zone of the user of the telephone device, i.e. it differs from the Greenwich time as much as the time of the telephone device. Then the user needs to input to the memory of the telephone only those pieces of time zone information, which really differ from the time of his own regular location.

If the selected telephone number is a line telephone connection 203, the telephone device examines the area codes. In this embodiment of the invention, the country and area codes and the corresponding time zones have been saved in the memory of the telephone device as a permanent search table. The telephone device finds a country code corresponding to the selected number. If there is no country code in the selected telephone number or it is not unambiguous, i.e. there is a number of area codes in the area of the country code, the area code is also examined, on the basis of which a time parameter for determining 204 the time of the recipient is found from the saved permanent table.

The time zone information can also be saved in the memory as a property of a caller group. Then the time zone information is found on the basis of the grouping of the name and number information 206 and is the same for each member of the group. This embodiment has the advantage that the information of the group is updated for all the members of the group at once, and it is not necessary to save the time zone information separately for each new member to be saved. Naturally, the groups must now be selected so that the members are located in the same time zone, because the whole group has the same time zone information.

If the selected number is not a line telephone connection 203 and does not belong to any caller group 205, the telephone device retrieves the time zone parameter 207, which corresponds to the memory location of the selected number. When the time zone parameter has been determined in accordance with step 204, 206 or 207, the time of the selected number is calculated by means of the obtained parameter 208.

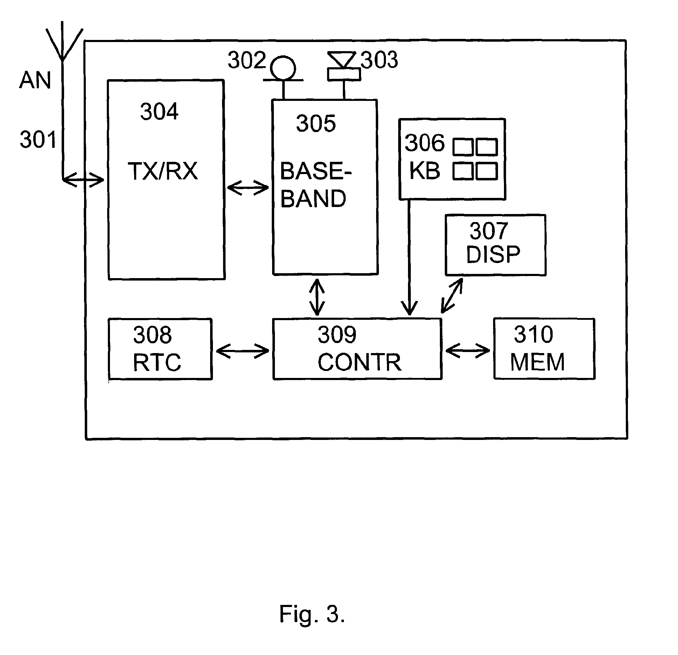

Fig. 3 shows a block diagram of a telephone device, which comprises typical parts, such as a microphone 302, a keyboard 306, an earphone 303, a transmission/reception block 304, an antenna 301, a baseband part 305, a real time clock 308, a display 307 and a memory unit 310. The control unit 309 controls the operation of the telephone device. In the embodiment according to the invention, the control unit compares the real time of the device to the time of the destination it has obtained. When required, the control unit 309 gives the user a message about the determined time difference to the display 307 and/or the earphone 303. The user replies to the time difference message with a keyboard input 306, on the basis of which the control unit 309 either cancels the command to connect a call, or after receiving the user's verification, forwards the command via the transmitter block 304 and the antenna 301 to the radio network.

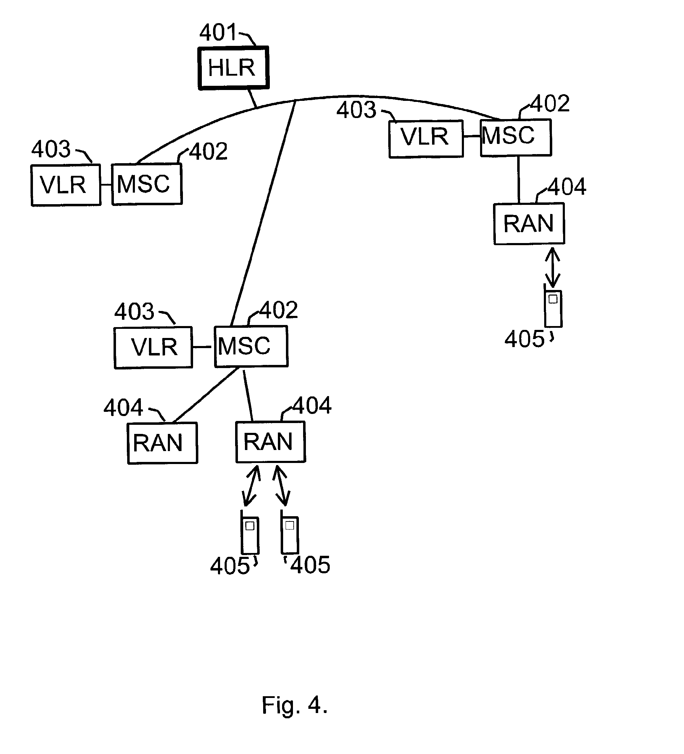

In the embodiment shown in Fig. 4, the receiving device is a terminal device of a cellular radio system, in which case the telephone device can get the real time zone information of the receiving device at the moment from the network. Separate telephone devices 405 operate as the lowest branches of the network so that there are several radio access networks 404 under the mobile switching centres 402, and the separate telephone devices 405 operate under the radio access networks. Each mobile switching centre 402 has a Visitor Location Register 402, which maintains information about the location of separate telephone devices in the areas of the radio access networks under this mobile switching centre. Thus the Visitor Location Register can, when required, iterate the radio network in the area of which a certain telephone device is at the moment. The mobile switching centres 402 have been connected to each other, and the centres of a certain area update a common Home Location Register 401, which contains information as to under which mobile switching centre the separate telephone devices of the network are. Then the Home Location Register 401 also contains information indicating which telephone devices are in the time zone of this network at the moment.

If the wanted telephone device is found under the same mobile switching centre as the caller, the time parameter is not transmitted. This is expedient, because the telephone devices are then in the same time zone. By transmitting the time parameter in connection with the location update, possible travelling of the recipient from one time zone to another is taken into account. The time zone information is also saved in the home location register in the course of normal operation in connection with a regular location update at least implicitly, because information as to under which mobile switching centre the telephone is at any given time is saved in the home location register, and the telephone can be assumed to be in the same time zone as the centre in question. The person who gives the command to establish a connection thus has the real time zone information available, and not only the assumed time parameter of the regular location of the recipient, as in the embodiments described above. However, in order to be able to transmit information between telephone devices, a permission of the user is imperative, because the time zone information also indicates the location of the recipient with a certain accuracy to the person who makes the call request. In order to prevent violation of people's privacy, the transmission of the time parameter must be an operation which can be performed only with the permission of the user. The permission to transmit information of the time zone can be saved in the Home Location Register, from which it is sent as a parameter together with the location information.

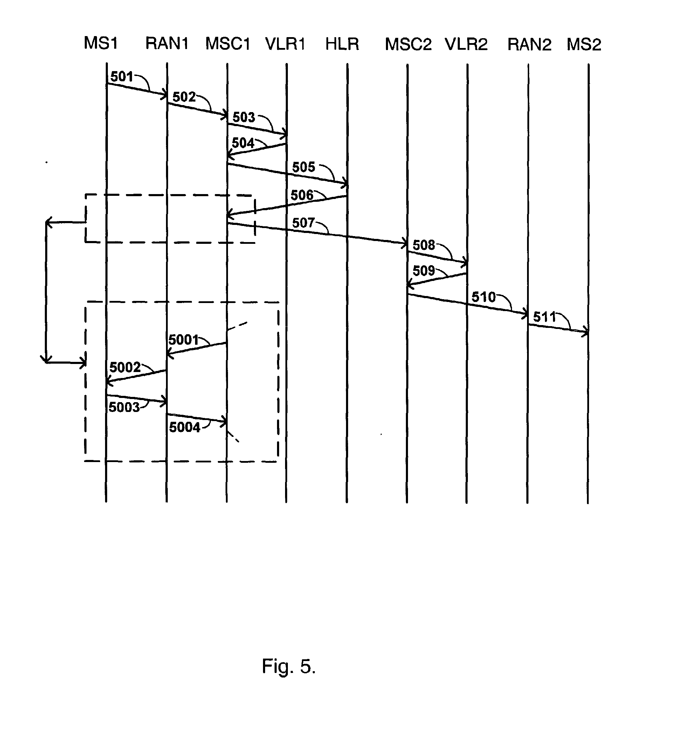

Fig. 5 shows in detail how the request to establish a speech connection proceeds in the cellular network, and at which stage the time information of the destination is checked. The telephone device MS1 presents a request to establish a connection, i.e. it wants to call the telephone device MS2 (501). The radio access network RAN, where the MS1 is at the moment, transmits a message to the mobile switching centre MSC1 indicating that the device MS1 wants to establish a connection to the device MS2 (502). The mobile switching centre MSC1 checks at first whether the device, which is the object of the connection request, is in the area of this switching centre (503), i.e. whether it is found in the Visitor Location Register VLR of the MSC1. If the device, which is the object of the connection request, is found in the Visitor Location Register, the speech connection can be established without transmitting a time parameter, because there is no time difference between the devices. If the device is not found in the Visitor Location Register (504), the Mobile Switching Centre MSC1 sends a query to the Home Location Register (505), which contains the information indicating under which mobile switching centre the wanted telephone device MS2 is. Having received information about the location (506) of the receiving device, the mobile switching centre MSC1 sends to the mobile switching centre MSC2 of the receiving device the information that a telephone device in its area wants to establish a connection with a telephone device, which is in the area of MSC2 (507). MSC2 sends a query to its Visitor Location Register VLR2, asking where the telephone device MS2 is (508). The mobile switching centre MSC2 receives from its Visitor Location Register VLR2 the information that the wanted telephone device is located in the area of the radio access network RAN2 (509). The mobile switching centre MSC2 sends to the radio access network RAN2 the information that the telephone device MS1 wants to establish a connection with the telephone device MS2 (510), and the radio access network RAN2 transmits this information further to the telephone device MS2 (511).

According to one embodiment, when a user wants to check the time parameter of a receiving telephone device, it is done after step 506, i.e. when it is known under which mobile switching centre the object of the speech connection request is. In that situation, when the Home Location Register sends the information about the mobile switching centre of the object, the time zone of that mobile switching centre would also come as a parameter. The mobile switching centre MSC1, which receives the time parameter, transmits the time parameter to the radio access network RAN1 (5001), from where it is further transmitted to the telephone device MS1 (5002) asking for the speech connection. On the basis of the time information received, the user of the telephone device MS1 can either cancel the request to establish a speech connection or confirm the request in spite of the time difference (5003). Through the radio access network RAN1, the request to establish a connection is transmitted further to the mobile switching centre MSC1 (5004). After this, the call is connected as normally, proceeding from step 507.

According to one embodiment, the time parameter is transmitted between separate telephone devices. In this case, the receiving device sends its own RTC (real time clock) time to the device asking to set up the call, using the so-called User to User Signalling method. Also in this method, the real time of the object is transmitted to the device asking for the call.

## Claims

1. A method for taking the time parameter into account in connection with call setup, **characterized in that** it comprises steps in which
- a command (101) to set up a call to a certain destination is received,
- as a response to the command, a time parameter (102) describing the time in the destination is determined.
- on the basis of the time parameter, the time difference (104) between the place where the command to set up a call is processed and the destination is determined, and
- the determined time difference (105) is indicated to the user.

2. A method according to Claim 1, **characterized in that** said time parameter is retrieved from a list of names and numbers (207), which exists in the memory of the telephone.

3. A method according to Claim 1, **characterized in that** said time parameter is retrieved from the characteristics of the caller group (205).

4. A method according to Claim 1, **characterized in that** said time parameter is retrieved from a search table (203), in which certain parts of telephone numbers of line telephone connections correspond to certain time parameters.

5. A method according to Claim 1, **characterized in that** said time parameter is obtained when the Home Location Register (401) transmits to the device (405) setting up the call the time parameter of the mobile switching centre (402) under which the receiving device (405) is at the moment.

6. A method according to Claim 1, **characterized in that** in order to find out the time difference, the determined time (208) of the destination is compared to the real time of the device in the control unit of the telephone device.

7. A method according to Claim 1, **characterized in that** the determined time difference is indicated to the user (105) on the display of the device and by a sound from the loudspeaker.

8. Apparatus for taking the time parameter into account in connection with call setup, **characterized in that** it includes
- means (308, 309) for producing real time information,
- means (309, 310) for determining the time parameter of the destination of the call as a response to the command to set up a call,
- means (309) for determining the time difference by means of real time information and the time parameter, and
- means (307, 303) for indicating the determined time difference to the user.

9. Apparatus according to Claim 8, **characterized in that** the apparatus has a real time clock (308) for keeping it continuously in real time.

10. Apparatus according to Claim 8, **characterized in that** for determining the time parameter it has a memory (310) and a list of names and numbers saved in it, in which list a saved time parameter corresponds to a saved name and number.

11. Apparatus according to Claim 8, **characterized in that** the time parameter, which should be determined, has been saved in the memory (310) as a property of a caller group.

12. Apparatus according to Claim 8, **characterized in that** the time parameter, which should be determined, has been saved in the memory (310) in a permanent search table, in which certain parts of telephone numbers of line telephone connections correspond to certain time parameters.

13. Apparatus according to Claim 8, **characterized in that** it includes means (304) for receiving a time parameter from the home location register (401).

14. Apparatus according to Claim 8, **characterized in that** in order to determine the time difference, it includes means for comparing the determined time of the destination to the real time of the device in the control unit (309) of the telephone device.

15. Apparatus according to Claim 8, **characterized in that** it includes a display (307) and a loudspeaker (303) for indicating the determined time difference.
